# EUROPÄISCHE PATENTSCHRIFT

(11) **EP 0 450 126 B1**
(45) Veröffentlichungstag und Bekanntmachung des Hinweises auf die Patenterteilung: **16.02.1994**
(21) Anmeldenummer: 90106586.2
(22) Anmeldetag: 06.04.1990
(51) Int. Cl.: H02H 7/122, H02M 5/45

(54) **Schutz- und Überwachungseinrichtung für eine Pulswiderstandsanordnung eines Spannungszwischenkreisumrichters**
Protection and monitoring device for a pulse resistor of a voltage intermediate circuit converter
Dispositif pour protéger et surveiller une résistance à impulsion pour un circuit intermédiaire de convertisseur de tension

(43) Veröffentlichungstag der Anmeldung: 09.10.1991
(73) Patentinhaber: SIEMENS AKTIENGESELLSCHAFT, 80333 München (DE)
(72) Erfinder: Link, Ulrich, Dr.Ing., D-8523 Baiersdorf (DE); Schrepfer, Armin, Dipl.-Ing., D-8521 Grossenseebach (DE)

(56) Entgegenhaltungen:
- DE-A- 2 352 447
- ELEKTRISCHE BAHNEN. vol. 80, no. 11, November 1982, MUNCHEN DE Seiten 314 - 317; P.Appun et.al.: "Die elektrische Auslegung der Stromrichterausrüstung der Lokomotive 120 der Deutschen Bundesbahn"

## Beschreibung

Die Erfindung bezieht sich auf eine Schutz- und Überwachungseinrichtung für eine Pulswiderstandsanordnung eines Spannungszwischenkreisumrichters, bestehend aus einem ungesteuerten Netzgleichrichter, einem Spannungszwischenkreis und einem Pulswechselrichter, wobei die Pulswiderstandsanordnung elektrisch parallel zum Spannungszwischenkreis geschaltet ist und aus einer Reihenschaltung, bestehend aus einem ein- und ausschaltbaren Stromrichterventil und einer Freilaufdiode, einer Ansteuereinrichtung und einem Pulswiderstand besteht, der elektrisch parallel zur Freilaufdiode geschaltet ist.

Aus der Druckschrift "Drehzahlveränderbare Antriebe in der Praxis", 1989, Siemens, Bestell-Nr. A19100-E319-A365, Seiten 53 bis 58, ist ein Spannungszwischenkreisumrichter bekannt, der eine eingangs genannte Pulswiderstandsanordnung aufweist. Mittels dieser geregelten Pulswiderstandsanordnung wird generatorische Energie, die durch generatorischen Betrieb der Arbeitsmaschine am Umrichterausgang auftritt, abgebaut, wenn als Netzgleichrichter des Spannungszwischenkreisumrichters nur ein ungesteuerter Netzgleichrichter verwendet wird. Durch diesen Abbau der vom Verbraucher dem Spannungszwischenkreis zugeführten Energie werden die Bauelemente des Umrichters, insbesondere die Gleichrichterventile, Kondensatoren und Ventile des Pulswechselrichters, vor einer Zerstörung geschützt.

Bei der Pulswiderstandsanordnung wird bei einer zu hohen Zwischenkreisspannung der Pulswiderstand über ein Stromrichterventil, das mittels einer Ansteuereinrichtung angesteuert wird, elektrisch parallel zum Spannungszwischenkreis geschaltet. D.h., der Spannungszwischenkreis wird niederohmig getaktet kurzgeschlossen, wodurch die Energie aus dem Zwischenkreis mittels des Pulswiderstandes in Wärme umgesetzt wird. Die Ansteuerung des Stromrichterventils ist abhängig von der Zwischenkreisspannung. Wenn die Leistung des im Umrichter befindlichen Pulswiderstandes nicht ausreicht, kann diesem Pulswiderstand ein außerhalb des Umrichters angeordneter, weiterer Pulswiderstand parallel geschaltet werden. Bedingt durch die recht kurzen Einschaltdauern, da die umrichtergespeisten Motoren überwiegend im motorischen Betrieb arbeiten, sind die Pulswiderstände für eine hohe Kurzzeitleistung, jedoch nur für eine geringe Dauerleistung ausgelegt. Wenn zwischen den Leistungsanschlüssen des Stromrichterventils ein Kurzschluß auftritt, ist der Pulswiderstand, der für Kurzzeitbetrieb ausgelegt ist, für eine längere Zeit an der vollen Zwischenkreisspannung. Infolge der dabei ständig anfallenden hohen Verlustleistung wird der Pulswiderstand überlastet und zerstört. Ferner können sogar Folgeschäden innerhalb und außerhalb des Umrichters entstehen.

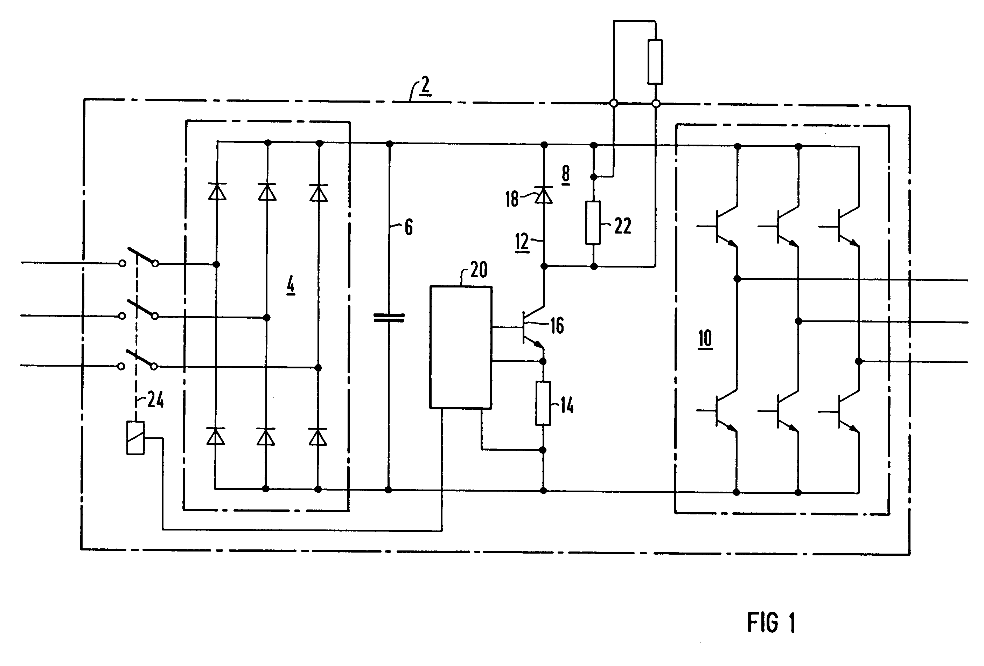

Im Handel sind Spannungszwischenkreisumrichter mit Pulswiderstandsanordnungen erhältlich, wobei ein eventuell auftretender Kurzschluß des Stromrichterventils der Pulswiderstandsanordnung erfaßt wird. Die Figur 1 zeigt einen derartigen bekannten Spannungszwischenkreisumrichter 2. Dieser Spannungszwischenkreisumrichter 2 besteht aus einem ungesteuerten Netzgleichrichter 4, einem Spannungszwischenkreis 6 und einer Pulswiderstandsanordnung 8 und einem Pulswechselrichter 10. Die Pulswiderstandsanordnung 8 besteht aus einer Reihenschaltung 12, bestehend aus einem Strommeßglied 14, einem ein- und ausschaltbaren Stromrichterventil 16 und einer Freilaufdiode 18, einer Ansteuereinrichtung 20 und einem Pulswiderstand 22, der elektrisch parallel zur Freilaufdiode 18 geschaltet ist. Diese Pulswiderstandsanordnung 8 ist elektrisch parallel zum Spannungszwischenkries 6 geschaltet. Die Ansteuereinrichtung 20 ist mit einem Steuereingang des Stromrichterventils 16 verknüpft. Der Spannungsabfall am Strommeßglied 14 wird dieser Ansteuereinrichtung 20 zugeführt. Außerdem ist ein zweiter Ausgang mit einem Schütz 24 verknüpft, das zwischen einem Versorgungsnetz und dem Netzgleichrichter 4 angeordnet ist.

Wenn mittels des Strommeßgliedes 14 ein Strom durch das Stromrichterventil 16 ermittelt wird, obwohl von der Ansteuereinrichtung 20 der Befehl "Aus" vorgegeben wird, liegt ein Kurzschluß am Stromrichterventil 16 vor. In diesem Fall wird das Schütz 24 angesteuert, das den Umrichter 2 vom Versorgungsnetz trennt. Ein Betrieb des Umrichters 2 ist somit auch dann nicht mehr möglich, wenn der Verbraucher keine Energie in den Zwischenkreis zurückliefern würde, da der Umrichter 2 vom Versorgungsnetz getrennt ist. Dieses Schütz 24 kann aber auch zwischen dem Spannungszwischenkreis 6 und der Pulswiderstandsanordnung 8 angeordnet sein, so daß im Falle eines Kurzschlusses am Stromrichterventil 16 die Pulswiderstandsanordnung 8 vom Spannungszwischenkreis 6 abgetrennt wird. Ein solches Schütz 24 muß aber in der Lage sein, einen Gleichstrom beachtlicher Höhe abzuschalten.

Der Erfindung liegt nun die Aufgabe zugrunde, eine Schutz- und Überwachungseinrichtung für eine Pulswiderstandsanordnung eines Spannungszwischenkreisumrichters anzugeben, wobei nach einem Kurzschlußfall am Stromrichterventil der Pulswiderstandsanordnung ein eingeschränkter Betrieb des Umrichters möglich ist und diese Schutz- und Überwachungseinrichtung einfach aufgebaut ist.

Diese Aufgabe wird erfindungsgemäß dadurch gelöst, daß elektrisch parallel zur Freilaufdiode ein zweites Stromrichterventil geschaltet ist, daß zwischen einem Verbindungspunkt Kathode der Freilaufdiode - Pulswiderstand und einer positiven Klemme des Spannungszwischenkreises eine Sicherung angeordnet ist und daß ein Verbindungspunkt der beiden Stromrichterventile mit der Überwachungseinrichtung elektrisch leitend verbunden ist.

Das zweite Stromrichterventil wird solange im ausgeschalteten Zustand gehalten, solange kein Kurzschluß am ersten Stromrichterventil auftritt. Dieses Stromrichterventil braucht nur für einen Bruchteil des Stromes ausgelegt werden, der durch das erste Stromrichterventil fließt. Wenn die Überwachungseinrichtung erkennt, daß am ersten Stromrichterventil ein Kurzschluß ansteht, wird das zweite Stromrichterventil vom sperrenden Zustand in den leitenden Zustand gesteuert, wodurch ein Kurzschluß zwischen der positiven und negativen Klemme des Spannungszwischenkreises hergestellt wird. Durch den sich einstellenden hohen Kurzschlußstrom wird das zweite Stromrichterventil zerstört und die Sicherung spricht an. Dadurch ist die Pulswiderstandsanordnung vom Spannungszwischenkreis getrennt und die Gefahr einer Zerstörung des Pulswiderstandes gebannt. Durch die Zerstörung eines kostengünstigen Bauelementes wird erreicht, daß ein kostenintensives Bauelement - der Pulswiderstand - mit geringem Aufwand vor einer Zerstörung bewahrt oder noch größerer Folgeschaden verhindert werden. Außerdem kann der Umrichter - falls erforderlich - im eingeschränkten Betrieb weiter betrieben werden.

Bei einer vorteilhaften Ausführungsform der Schutz- und Überwachungseinrichtung für eine Pulswiderstandsanordnung sind die beiden Stromrichterventile und die Freilaufdiode Bauelemente eines Zweigpaarmoduls. Durch einen Defekt im Pulswiderstand (Kurzschluß, Erdschluß) kann das Stromrichterventil zumindest geschädigt, wenn nicht sogar zerstört werden. Die beabsichtigte Zerstörung des zweiten Stromrichterventils dieses Zweigpaarmoduls stellt somit keinen zusätzlichen Schaden dar, da das Modul durch das beschädigte erste Stromrichterventil ohnehin ersetzt werden muß. Somit kann man mit einem bereits geschädigten Bauelement noch auf einfache Weise kostenintensive Bauelemente vor einer Zerstörung bewahren.

Eine Ausführungsform der Überwachungseinrichtung ist dem Unteranspruch 3 zu entnehmen. Mittels dieser Überwachungseinrichtung wird festgestellt, ob bei einem Steuerbefehl "Aus" für das erste Stromrichterventil der Pulswiderstandsanordnung ein Strom fließt. Wenn dies festgestellt wird, generiert die Überwachungseinrichtung ein Steuersignal, wodurch mittels der Ansteuereinrichtung das zweite Stromrichterventil leitend gesteuert wird.

Bei einer weiteren vorteilhaften Ausführungsform der Schutz- und Überwachungseinrichtung ist der Überwachungseinrichtung ein Verzögerungsglied nachgeschaltet. Dieses in der Vorwärtsrichtung wirkende Verzögerungsglied stellt sicher, daß nach dem Auftreten des Ausschaltbefehls für das erste Stromrichterventil die Überwachungseinrichtung erst dann eine Schutzzündung des zweiten Stromrichterventils einleitet, wenn nach Ablauf der als bekannt vorausgesetzten maximalen Abschaltzeit des ersten Stromrichterventils, insbesondere zuzüglich einer Sicherheitsspanne, dessen Kollektor-Emitter-Spannung noch nicht angestiegen ist.

Zur weiteren Erläuterung der Erfindung wird auf die Zeichnung Bezug genommen, in der eine Ausführungsform der Schutz- und Überwachungseinrichtung schematisch veranschaulicht ist.
- Figur 2: zeigt einen Spannungszwischenkreisumrichter mit einer erfindungsgemäßen Schutz- und Überwachungseinrichtung für eine Pulswiderstandsanordnung, in
- Figur 3: ist ein Blockschaltbild einer Ansteuereinrichtung mit einer erfindungsgemäßen Überwachungseinrichtung dargestellt und die
- Figur 4: veranschaulicht eine Ausführungsform einer Treiberschaltung der Ansteuereinrichtung.

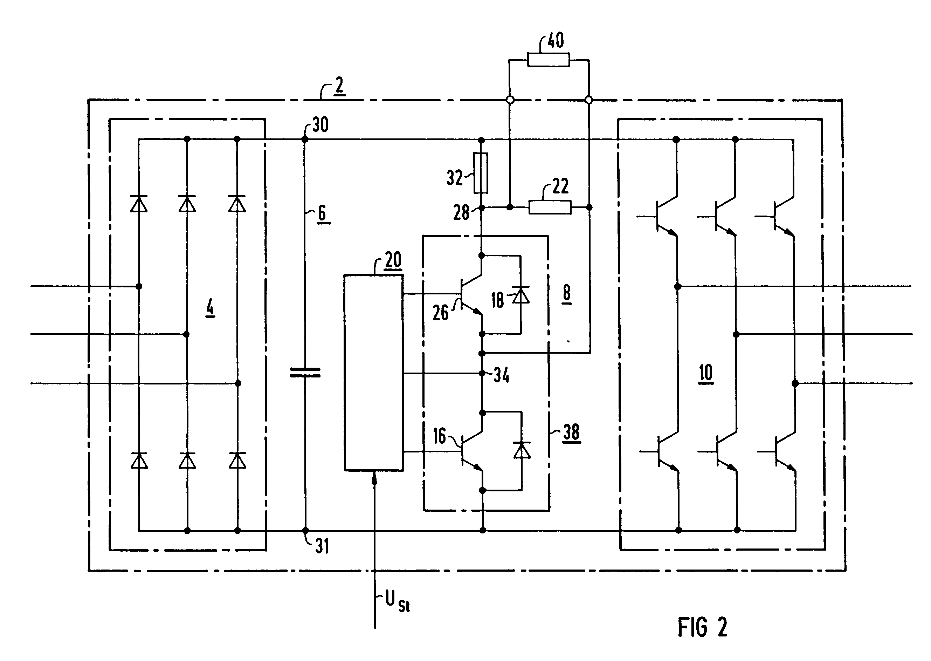

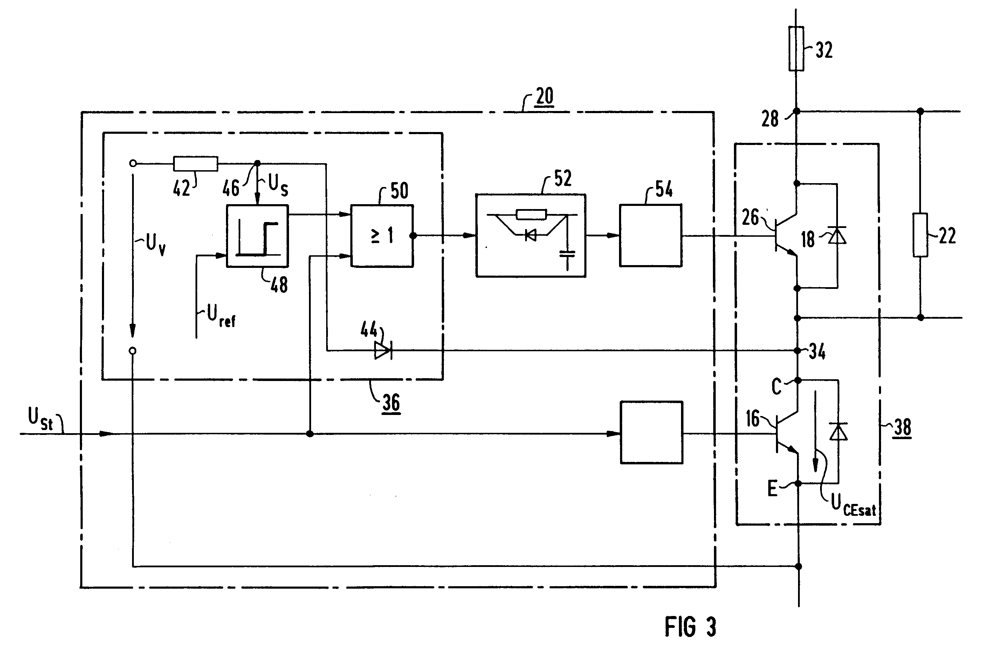

In Figur 2 ist ein Spannungszwischenkreisumrichter 2 dargestellt, dessen Aufbau sich vom Aufbau des Spannungszwischenkreisumrichters 2 nach Figur 1 in der Ausführungsform der Pulswiderstandsanordnung 8 unterscheidet. Deshalb sind dieselben Bauelemente mit gleichen Bezugszeichen versehen. Der Pulswiderstandsanordnung 8 ist elektrisch parallel zur Freilaufdiode 18 ein zweites Stromrichterventil 26 geschaltet. Zwischen dem Verbindungspunkt 28 (Kathode der Freilaufdiode 18 - Pulswiderstand 22) und der positiven Klemme 30 des Spannungszwischenkreises 6 ist eine Sicherung 32 geschaltet. Ein Verbindungspunkt 34 der beiden Stromrichterventile 16 und 26 ist mit einer Überwachungseinrichtung 36, die Bestandteil der Ansteuereinrichtung 20 ist, elektrisch verbunden. Die Überwachungseinrichtung 36 ist in der Figur 3 näher dargestellt. Die beiden Stromrichterventile 16 und 26 sind vorzugsweise Bauelemente eines Zweigpaarmoduls 38. Als Stromrichterventile 16 und 26 des Zweigpaarmoduls 38 können beispielsweise bipolare Leistungstransistoren (LTR) oder Insulated-Gate-Bipolar-Transistors (IGBT) oder selbstsperrende Feldeffekttransistoren (MOS-FET) vorgesehen sein.

Das zweite Stromrichterventil 26 wird zunächst nicht benötigt, d.h., im Normalbetrieb (kein Kurzschlußfall) wird dieses Stromrichterventil 26 von der Ansteuereinrichtung 20 im nichtleitenden Zustand gehalten. Wenn nun von einer Last am Ausgang des Pulswechselrichters 10 Energie zurück in den Spannungszwischenkreis 6 gespeist wird, steigt die Zwischenkreisspannung an, wodurch aus dem Versorgungsnetz keine Energie mehr entnommen wird. Um eine Zerstörung von Bauelementen des Umrichters zu vermeiden, muß die dem Spannungszwischenkreis 6 vom Verbraucher zugeführte Energie aus dem Zwischenkreis 6 abgeführt werden. Dies geschieht dadurch, daß die Ansteuereinrichtung 20 das Stromrichterventil 16 getaktet ansteuert. Dadurch wird der Pulswiderstand 22 kurzzeitig elektrisch parallel zum Spannungszwischenkreis 6 geschaltet, wodurch Energie aus dem Spannungszwischenkreis 6 abgeführt und mittels des Pulswiderstandes 22 in Wärme umgesetzt wird. Falls die Verlustleistung des Pulswiderstandes 22 nicht ausreicht, kann diesem Pulswiderstand 22 ein weiterer Pulswiderstand 40 außerhalb des Umrichters 2 parallel geschaltet werden. Bei den üblichen Anwendungen (recht kurze relative Einschaltdauer) sind die Pulswiderstände 22 und 40 zwar für eine hohe Kurzzeitleistung jedoch nur für eine geringe Dauerleistung ausgelegt.

Wenn in diesem Betrieb (generatorischer Betrieb der Last) durch einen Defekt am Stromrichterventil 16 ein Kurzschluß zwischen seinen Leistungsanschlüssen auftritt, liegen die für Kurzzeitbetrieb ausgelegten Pulswiderstände 22 und 40 für eine längere Zeitdauer an der vollen Zwischenkreisspannung. Infolge der dabei ständig anfallenden hohen Verlustleistungen werden die Widerstände 22 und 40 überlastet und zerstört.

Die Überwachungseinrichtung 36 der Ansteuereinrichtung 20 erkennt den Kurzschluß am Stromrichterventil 16 und schaltet das zweite Stromrichterventil 26 des Moduls 38 ein. Zwischen der positiven und der negativen Klemme (Schiene) 30 und 31 des Spannungszwischenkreises 6 tritt ein Kurzschluß auf. Ein hoher Kurzschlußstrom fließt bis die Sicherung 32 anspricht. Der Kurzschlußstrom zerstört auch das Stromrichterventil 26 im Modul 38. Die Pulswiderstandsanordnung 8 ist damit vom Spannungszwischenkreis 6 getrennt, wodurch der Pulswiderstand 22 (bzw. die Pulswiderstände 22 und 40) gegen Überlastung und/oder Zerstörung geschützt ist.

Durch die absichtliche Zerstörung eines weiteren Bauelementes (zweites Stromrichterventil 26) wird die Zerstörung kostenintensiver Bauelemente (Pulswiderstand 22) des Umrichters 2 und das Entstehen eines noch höheren Schadens (z.B. Brand) auf einfache Weise vermieden. Da im Strombereich bis 150A die Verwendung von Zweigpaarmoduln 38 wirtschaftlich ist, entsteht durch die Zerstörung eines zweiten Bauelementes dieses Moduls 38 kein zusätzlicher Schaden, da bereits durch die Zerstörung des ersten Stromrichterventils 16 das Zweigpaarmodul 38 ausgetauscht werden muß. D.h., bei der Verwendung von Zweigpaarmoduln 38 wird ein bis dahin nicht benutzter Teil dieses Moduls 38 zum Schutz des Pulswiderstandes 22 benutzt. Da nach der Beendigung der Schutzmaßnahmen nur der Pulswiderstand 22 bzw. die Pulswiderstände 22 und 40 vom Spannungszwischenkreis 6 getrennt ist bzw. sind, kann der Umrichter 2 im eingeschränkten Betrieb (kein generatorischer Betrieb) weiterbetrieben werden.

In Figur 3 ist eine Ausführungsform der Überwachungseinrichtung 36 der Ansteuereinrichtung 20 näher dargestellt. Die Überwachungseinrichtung 36 besteht aus einer Reihenschaltung Widerstand 42 - Diode 44, die von einer Spannungsquelle, dargestellt durch einen Spannungspfeil U_{V}, versorgt wird. Der Verbindungspunkt 46 von Widerstand 42 und Diode 44 ist elektrisch leitend verbunden mit einem ersten Eingang eines Komparators 48, an dessen zweitem Eingang eine Referenzspannung U_{ref} ansteht. Ausgangsseitig ist dieser Komparator 48 mit einem ersten Eingang eines NOR-Gatters 50 verbunden, an dessen zweitem Eingang die Steuerbefehle U_{St} für das erste Stromrichterventil 16 anstehen. Diese Steuerbefehle U_{St} werden von einer übergeordneten Steuerung, die aus Übersichtlichkeitsgründen nicht dargestellt ist, generiert. Der Ausgang des NOR-Gatters 50 ist mit einem Verzögerungsglied 52 mit nachgeschalteter Treiberstufe 54 für das zweite Stromrichterventil 26 verknüpft.

Da die Spannung U_{V} deutlich (mehr als eine Dioden-Flußspannung) über der Durchlaßspannung U_{CEsat} des eingeschalteten Stromrichterventils 16 liegt, fließt bei eingeschaltetem Stromrichterventil 16 über den Widerstand 42 und die Diode 44 ein Strom zum Kollektor C des Stromrichterventils 16. Die Spannung U_{S} am Verbindungspunkt 46 liegt bezogen auf den Emitter E des Stromrichterventils 16 um die Flußspannung der Diode 44 über der Durchlaßspannung U_{CEsat} des Stromrichterventils 16. Über den Komparator 48, dessen Schaltschwelle mittels der Referenzspannung U_{ref} so gelegt ist, daß er erkennt, ob das erste Stromrichterventil 16 ein- oder ausgeschaltet ist, wird dann an das NOR-Gatter 50 der logische Pegel "0" geleitet. Da gleichzeitig der Steuerbefehl U_{St} einen logischen Pegel "1" aufweist, steht am Ausgang des NOR-Gatters 50 ein Signal mit logischem Pegel "0" an. Der Komparator 48 gibt auch im Falle eines Defektes (Kurzschluß) des ersten Stromrichterventils 16 ein Signal mit einem logischen Pegel "0" an das NOR-Gatter 50. Wenn das Stromrichterventil 16 einen Steuerbefehl U_{St} mit logischem Pegel "0" erhält, wird über das NOR-Gatter 50 und ein in Vorwärtsrichtung wirkendes Verzögerungsglied 52 ein Ein-Befehl an die Treiberstufe 54 geleitet, die ihrerseits das zweite Stromrichterventil 26 leitend schaltet.

Das in Vorwärtsrichtung wirkende Verzögerungsglied 52 stellt sicher, daß nach dem Auftreten des Ausschaltbefehls für das erste Stromrichterventil 16 die Überwachungseinrichtung 36 erst dann eine Schutzzündung des zweiten Stromrichterventils 26 einleitet, wenn nach Ablauf der als bekannt vorausgesetzten maximalen Abschaltzeit des ersten Stromrichterventils 16 dessen Kollektor-Emitter-Spannung U_{CE} noch nicht angestiegen ist.

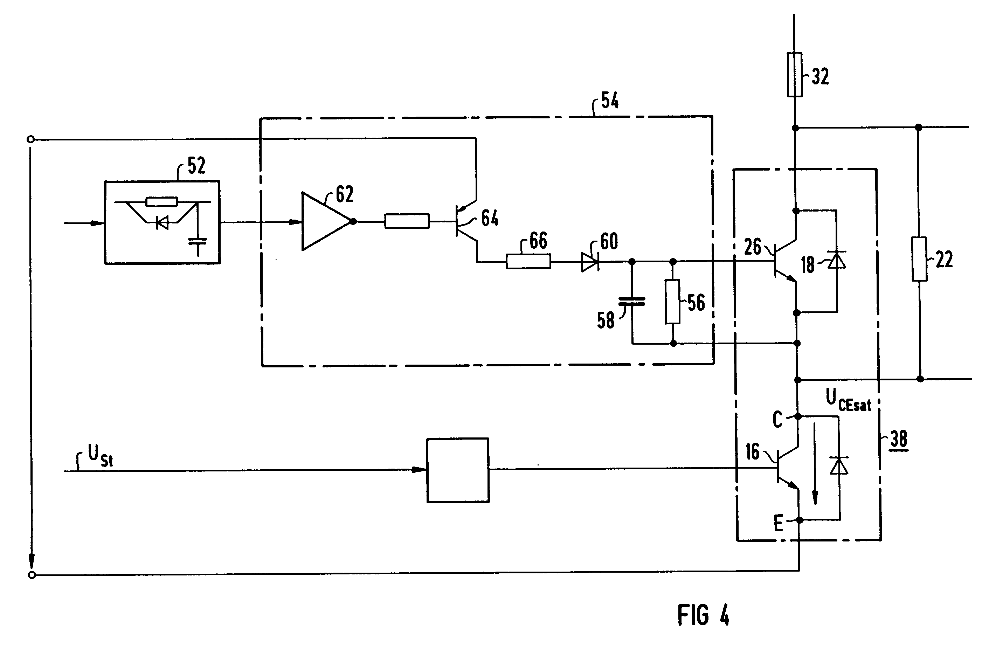

In der Figur 4 ist eine Ausführungsform der Treiberstufe 54 der Ansteuereinrichtung 20 näher dargestellt.

Im ausgeschalteten Zustand des ersten Stromrichterventils 16 ist das zweite Ventil 26 ausgeschaltet, da seine Steueranschlüsse (Basis- und Emitteranschluß) über einen niederohmigen Widerstand 56 miteinander verbunden sind und keine Spannung zwischen ihnen angelegt ist. Der dem Widerstand 56 parallelgeschaltete Kondensator 58 stellt sicher, daß vom ersten Stromrichterventil 16 hervorgerufene Schaltspitzen nicht zu einem Einschalten des zweiten Stromrichterventils 26 führen. Eine eigene Spannungsversorgung für die Ansteuerung des Ventils 26 wird nicht benötigt.

Die gesamte Ansteuereinrichtung 20 liegt mit Ausnahme des genannten Widerstandes 56 und des Kondensators 58 sowie einer Entkoppeldiode 60, die im ausgeschalteten Zustand des Stromrichterventils 16 das zweite Stromrichterventil 26 sowie den Widerstand 56 und den Kondensator 58 vom Potential des ersten Stromrichterventils 16 entkoppelt und zweckmäßigerweise dieselbe Sperrspannung wie das erste Stromrichterventil 16 des Moduls 38 aufweist, auf dem Potential des ersten Stromrichterventils 16 und damit auch auf der negativen Schiene 31 des Spannungszwischenkreises.

Im Störfall, also beim Kurzschluß am ersten Stromrichterventil 16, befindet sich der Emitter des zweiten Stromrichterventils 26 auf dem Potential der negativen Schiene 31 des Spannungszwischenkreises 6. Für das Einschalten dieses Ventils 26 ist daher keine eigene, potentialgetrennte Spannungsversorgung notwendig. Über das von einem Inverter 62 angesteuerte Ventil 64 wird mit Hilfe der Eingangsspannungsquelle, die zusätzlich zur Versorgung der Treiberstufe 54 für das zweite Stromrichterventil 26 des Zweigpaarmoduls 38 verwendet werden kann, ein durch einen Widerstand 66 limitierter Steuerstrom zum zweiten Stromrichterventil 26 durchgeschaltet.

## Patentansprüche

1. Schutz- und Überwachungseinrichtung (36) für eine Pulswiderstandsanordnung (8) eines Spannungszwischenkreisumrichters (2), bestehend aus einem ungesteuerten Netzgleichrichter (4), einem Spannungszwischenkreis (6) und einem Pulswechselrichter (10), wobei die Pulswiderstandsanordnung (8) elektrisch parallel zum Spannungszwischenkreis (6) geschaltet ist und aus einer Reihenschaltung, bestehend aus einem ein- und ausschaltbaren Stromrichterventil (16) und einer Freilaufdiode (18), einer Ansteuereinrichtung (20) und einem Pulswiderstand (22) besteht, der elektrisch parallel zur Freilaufdiode (18) geschaltet ist, **dadurch gekennzeichnet,** daß elektrisch parallel zur Freilaufdiode (18) ein zweites Stromrichterventil (26) geschaltet ist, daß zwischen einem Verbindungspunkt (28) Kathode der Freilaufdiode (18) - Pulswiderstand (22) und einer positiven Klemme (30) des Spannungszwischenkreises (6) eine Sicherung (32) angeordnet ist und daß ein Verbindungspunkt (34) der beiden Stromrichterventile (16, 26) mit der Überwachungseinrichtung (36) elektrisch leitend verbunden ist.

2. Schutz- und Überwachungseinrichtung (36) nach Anspruch 1, **dadurch gekennzeichnet,** daß die beiden Stromrichterventile (16, 26) und die Freilaufdiode (18) Bauelemente eines Zweigpaarmoduls (38) sind.

3. Schutz- und Überwachungseinrichtung (36) nach Anspruch 1, **dadurch gekennzeichnet,** daß die Überwachungseinrichtung (36) aus einer Reihenschaltung Widerstand (42) - Diode (44), die von einer Spannungsquelle (Uᵥ) versorgt wird, einem Komparator (48), der den am Verbindungspunkt (46) Widerstand (42) - Diode (44) anstehenden Spannungswert (U_{S}) mit einem vorbestimmten Spannungswert (U_{ref}) vergleicht, und einem NOR-Gatter (50) besteht, wobei ein erster Eingang des NOR-Gatters (50) mit dem Ausgang des Komparators (48) verknüpft ist, an seinem zweiten Eingang ein Schaltbefehl (U_{St}) des ersten Stromrichterventils (16) der Pulswiderstandsanordnung (8) ansteht und sein Ausgang mit der Treiberstufe (54) verknüpft ist.

4. Schutz- und Überwachungseinrichtung (36) nach Anspruch 3, **dadurch gekennzeichnet,** daß dem Ausgang des NOR-Gatters (50) der Überwachungseinrichtung (36) ein Verzögerungsglied (52) nachgeschaltet ist.

5. Schutz- und Überwachungseinrichtung (36) nach Anspruch 1, **dadurch gekennzeichnet,** daß die Ansteuereinrichtung (20) für jedes Stromrichterventil (16, 26) eine Treiberstufe (54) enthält.

6. Schutz- und Überwachungseinrichtung (36) nach Anspruch 1, **dadurch gekennzeichnet,** daß die Überwachungseinrichtung (36) Bestandteil der Ansteuereinrichtung (20) für die beiden Stromrichterventile (16, 26) ist.

7. Schutz- und Überwachungseinrichtung (36) nach Anspruch 5, **dadurch gekennzeichnet,** daß im Fall eines Kurzschlusses des Stromrichterventils (16) als Versorgungsspannung für die Treiberstufe (54) des Stromrichterventils (26) die Versorgungsspannung für die Treiberstufe des ersten Stromrichterventils (16) vorgesehen ist.

## Claims

1. Protection and monitoring device (36) for a pulse resistance arrangement (8) of a voltage link converter (2), comprising a non-controlled system rectifier (4), a voltage link (6) and a pulse inverter (10), whereby the pulse resistance arrangement (8) is electrically connected in parallel with the voltage link (6) and comprises a series connection, comprising a converter valve (16) which can be switched on and off and a free-wheeling diode (18), a control device (20) and a pulse resistance (22), which is electrically connected in parallel with the free-wheeling diode (18), characterized in that a second converter valve (26) is electrically connected in parallel with the free-wheeling diode (18), in that a safety fuse (32) is arranged between a connection point (28) of the cathode of the free-wheeling diode (18) and pulse resistance (22) and a positive terminal (30) of the voltage link (6) and in that a connection point (34) of the two converter valves (16, 26) is connected in an electroconductive manner to the monitoring device (36).

2. Protection and monitoring device (36) according to claim 1, characterized in that the two converter valves (16, 26) and the free-wheeling diode (18) are components of a branch pair module (38).

3. Protection and monitoring device (36) according to claim 1, characterized in that the monitoring device (36) comprises a series connection of resistance (42) and diode (44), which is supplied from a voltage source (Uᵥ), a comparator (48), which compares the voltage value (U_{S}) present at the connection point (46) of resistance (42) and diode (44) with a predetermined voltage value (U_{ref}), and a NOR gate (50), whereby a first input of the NOR gate (50) is linked to the output of the comparator (48), at its second input there is a switching command (U_{St}) of the first converter valve (16) of the pulse resistance arrangement (8) and its output is linked to the driver stage (54).

4. Protection and monitoring device (36) according to claim 3, characterized in that a delay element (52) is connected after the output of the NOR gate (50) of the monitoring device (36).

5. Protection and monitoring device (36) according to claim 1, characterized in that the control device (20) for each converter valve (16, 26) contains a driver stage (54).

6. Protection and monitoring device (36) according to claim 1, characterized in that the monitoring device (36) is a component part of the control device (20) for the two converter valves (16, 26).

7. Protection and monitoring device (36) according to claim 5, characterized in that in the event of a short circuit of the converter valve (16) as supply voltage for the driver stage (54) of the converter valve (26) the supply voltage for the driver stage of the first converter valve (16) is provided.

## Revendications

1. Dispositif de protection et de contrôle (36) pour un dispositif à résistance en régime d'impulsions (8) d'un convertisseur (2) à circuit intermédiaire de tension, constitué d'un redresseur non commandé (4) du secteur, d'un circuit intermédiaire de tension (6) et d'un onduleur à impulsions (10), le dispositif à résistance en régime d'impulsions (8) étant branché électriquement en parallèle avec le circuit intermédiaire de tension (6) et étant formé par un circuit série, constitué d'une valve de conversion de courant (16) pouvant être activée et désactivée et d'une diode de roue libre (18), par un dispositif de commande (20) et par une résistance en régime d'impulsions (22), qui est branchée électriquement en parallèle avec la diode de roue libre (18), caractérisé par le fait qu'une seconde valve de conversion de courant (26) est branchée électriquement en parallèle avec la diode de roue libre (18), qu'un fusible (32) est disposé entre le point de jonction (28) de la diode de roue libre (18) et de la résistance en régime d'impulsions (22), et une borne positive (30) du circuit intermédiaire de tension (6), et qu'un point de jonction (34) des deux valves de conversion de courant (16,26) est relié de façon électriquement conductrice au dispositif de contrôle (36).

2. Dispositif de protection et de contrôle (36) suivant la revendication 1, caractérisé par le fait que les deux valves de conversion de courant (16,26) et la diode de roue libre (18) sont des composants d'un module (38) à deux branches.

3. Dispositif de protection et de contrôle (36) suivant la revendication 1, caractérisé par le fait que le dispositif de contrôle (36) est constitué d'un montage série à résistance (42) - diode (44), qui est alimenté par une source de tension (Uᵥ), d'un comparateur (48), qui compare la valeur de tension (U_{S}) présente au point de jonction (46) résistance (42) - diode (44) et une valeur de tension prédéterminée (U_{ref}), et d'une porte NON-OU (50), une première entrée de la porte NON-OU (50) étant connectée à la sortie du comparateur (48), tandis qu'une instruction de commutation (U_{St}) de la première valve de conversion de courant (16) du dispositif à résistance en régime d'impulsions (8) est appliquée à la seconde entrée de ce comparateur et que la sortie de ce dernier est connectée à l'étage d'attaque (54).

4. Dispositif de protection et de contrôle (36) suivant la revendication 3, caractérisé par le fait qu'un circuit à retard (52) est branché en aval de la sortie de la porte NON-OU (50) du dispositif de contrôle (36).

5. Dispositif de protection et de contrôle (36) suivant la revendication 1, caractérisé par le fait que le dispositif de commande (20) de chaque valve de conversion de courant (16,26) comporte un étage d'attaque (54).

6. Dispositif de protection et de contrôle (36) suivant la revendication 1, caractérisé par le fait que le dispositif de contrôle (36) fait partie du dispositif de commande (20) des deux valves de conversion de courant (16,26).

7. Dispositif de protection et de contrôle (36) suivant la revendication 5, caractérisé par le fait que dans le cas d'un court-circuit de la valve de conversion de courant (16), il est prévu comme tension d'alimentation de l'étage d'attaque (54) de la valve de conversion de courant (26), la tension d'alimentation de l'étage d'attaque de la première valve de conversion de courant (16).
